Europäisches Patentamt

European Patent Office

Office européen des brevets

(19)

(11) Numéro de publication : **0 456 776 B1**

(12)

# FASCICULE DE BREVET EUROPEEN

(45) Date de publication du fascicule du brevet :
**11.01.95 Bulletin 95/02**

(51) Int. Cl.⁶ : **G01N 29/00,** G01N 33/46

(21) Numéro de dépôt : **90916229.9**

(22) Date de dépôt : **21.11.90**

(86) Numéro de dépôt international :
**PCT/CH90/00266**

(87) Numéro de publication internationale :
**WO 91/08477 13.06.91 Gazette 91/13**

(54) **APPAREIL POUR LA DETERMINATION AUTOMATIQUE ET NON DESTRUCTIVE DE LA CLASSE DE PROPRIETES MECANIQUES STANDARDISEES D'UN ECHANTILLON DE MATERIAU HYGROSCOPIQUE.**

(30) Priorité : **01.12.89 CH 4317/89**

(43) Date de publication de la demande :
**21.11.91 Bulletin 91/47**

(45) Mention de la délivrance du brevet :
**11.01.95 Bulletin 95/02**

(84) Etats contractants désignés :
**AT BE CH DE ES FR GB LI SE**

(56) Documents cités :
**WO-A-84/01220
WO-A-88/09502
DE-A- 2 919 541
US-A- 4 201 093
US-A- 4 413 518
PATENT ABSTRACTS OF JAPAN, vol. 9, no.
163 (P-371)(1886), 9 juillet 1985 ; &
JP-A-6039556**

(73) Titulaire : **SANDES S.A.
Zone industrielle
CH-1614 Granges/Veveyse (CH)**

(72) Inventeur : **SANDOZ, Jean-Luc
23, avenue de la Gare
CH-1022 Chavannes/Renens (CH)**
Inventeur : **ROULET, Alain
Valentin 30
CH-1004 Lausanne (CH)**

(74) Mandataire : **KIRKER & Cie S.A.
122 rue de Genève,
Case Postale 65
CH-1226 Genève-Thônex (CH)**

## Description

On sait que pour divers matériaux de construction qui sont hygroscopiques, le bois en particulier, les propriétés mécaniques sont difficiles à déterminer, d'autant plus qu'elles varient avec le degré d'humidité à leur intérieur.

Jusqu'ici, pour le bois, on a établi expérimentalement des classes (3 ou 4 selon les systèmes) et c'est par inspection visuelle que des spécialistes du bois, rangent les échantillons dans la classe qui paraît appropriée. Cette façon de procéder est très approximative et dépendante du spécialiste. De plus elle ne tient guère compte du facteur teneur en humidité et température du matériau.

La présente invention vise à éliminer ces inconvénients et à fournir un appareil pour la détermination automatique et non destructive de la classe de propriétés mécaniques standardisées d'un échantillon d'un matériau hygroscopique tel que le bois, à partir de mesures effectuées par l'appareil lui-même sur l'échantillon considéré. L'invention est conforme à la revendication 1.

Le dessin annexé représente, à titre d'exemple, une forme d'exécution de l'appareil objet de l'invention.

Fig. 1 est une vue d'ensemble schématique de cette forme d'exécution.

Fig. 2 est une vue en coupe, schématique, d'une des deux têtes à détecteurs multiples que comporte cette forme d'exécution.

Fig. 3 est un schéma bloc de l'appareil selon fig. 1.

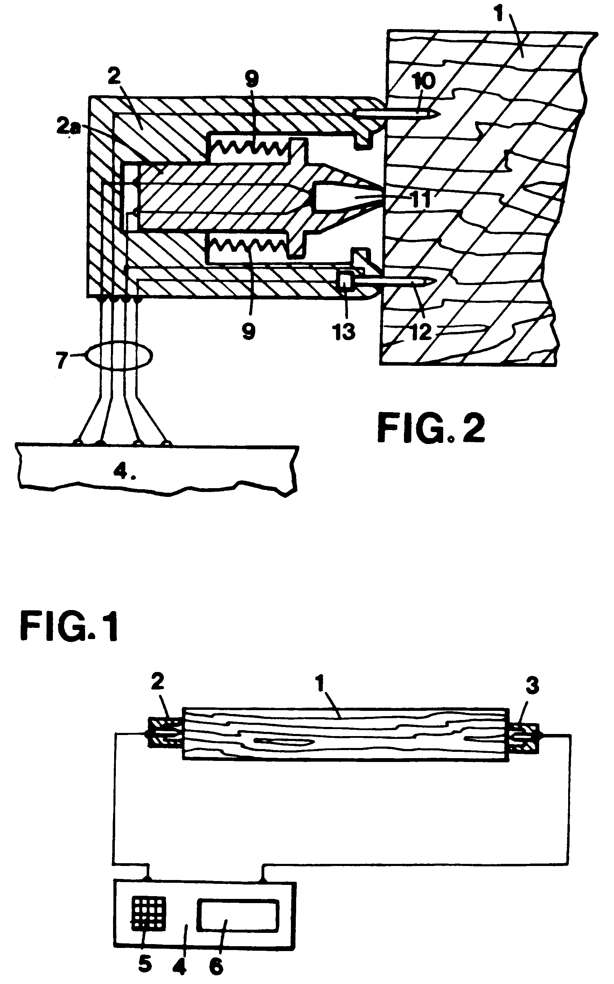

Sur la fig. 1, on voit en 1 une poutre en bois dont on désire connaître la classe de propriété mécaniques standardisées à laquelle elle appartient.

En 2 on a indiqué très schématiquement deux têtes 2, 3, appliquées chacune à l'une des extrémités de la poutre 1 et qui comportent chacune, comme on le verra plus loin, trois sondes ou détecteurs servant à mesurer le temps de propagation d'une onde ultrasonique émise par 2 et reçue par 3, le taux d'humidité dans la poutre et la température dans la poutre. Ces détecteurs sont de types connus. 4 est un boîtier dans lequel sont des dispositifs électroniques et qui est muni d'un clavier 5 et d'un affichage 6.

Sur la fig. 2, on voit la tête 2. Le corps de la tête 2 est en matière électriquement isolante. Il est équipé à son intérieur d'un corps coulissant 2a, à l'intérieur duquel est disposé un transducteur piézo-électrique 11 servant soit à l'émission d'ondes ultrasoniques, soit à la réception de celles-ci. Le corps 2 est solidaire de deux pointes métalliques 10, 12 destinées à être enfoncées dans la poutre 1, comme montré sur le dessin, pour assurer la fixation du corps 2 contre une face de la poutre 1, lorsqu'on les enfonce dans cette face en agissant par exemple avec un marteau sur l'extrémité de gauche de la tête 2, sur la fig. 2.

Un ressort de compression 9 sert à appliquer le transducteur 11 contre l'extrémité de la poutre. Il sert aussi à protéger le transducteur des chocs pendant l'enfoncement des pointes 10, 12.

Ces pointes 10, 12, servent de sonde pour mesurer la résistance électrique entre elles en vue de déterminer le degré d'humidité à l'intérieur de la poutre 1.

L'une des pointes, 12, est thermiquement reliée à une thermistance 13 disposée dans une cavité du corps 2 et qui sert à mesurer la température dans la poutre 1. A l'autre extrémité (non représentée) de la poutre 1, le transducteur piézo-électrique 11 du corps 3, reçoit les ondes ultrasoniques émises par le transducteur 11 du corps 2.

Sur la fig. 1, on voit que les éléments détecteurs des têtes 2, 3 sont reliés électriquement à un boîtier 4 dans lequel se trouvent les dispositifs électroniques qui seront indiqués plus loin, et qui comporte le clavier 5 et un dispositif d'affichage 6 à LCD par exemple. On voit sur la fig. 2 que ces liaisons se font par des câbles tels que 7 assurant la transmission des informations allant des détecteurs aux dispositifs électroniques qui sont dans le boîtier 4.

Le clavier 5 sert à fournir à ces dispositifs des données fournies par l'opérateur, par exemple la longueur de la poutre, et le numéro d'un code correspondant à l'espèce de matériau constituant la poutre 1 (espèce d'arbre par exemple).

Dans l'exemple selon fig. 1, l'émission d'une onde ultrasonore se fait par le dispositif 11 de la tête 2 (fig. 2), tandis que la réception se fait par le même élément de la tête identique 3.

Les informations fournies par les deux dispositifs 11, par les sondes 10, 12 des deux têtes 2 et 3, et par les deux thermistances 13 de 2 et 3 sont fournies au boîtier 4.

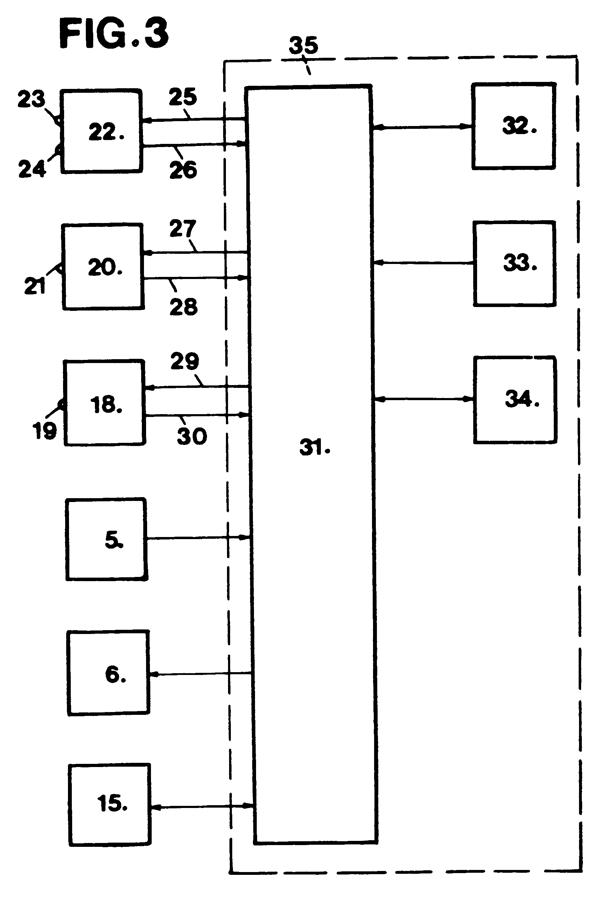

La fig. 3 montre schématiquement les différents dispositifs électroniques qui sont dans le boîtier 4 ou associés à celui-ci.

Il y a : un module 35 à microprocesseur 31, associé à une mémoire RAM 32, à une mémoire ROM 33 et à une mémoire EEPROM 34, dont les fonctions sont indiquées plus loin.

Il y a aussi un groupe de dispositifs que voici:

15, qui est un interface série, de type RS 232, qui permet d'établir une liaison avec un ordinateur non représenté, par exemple un PC, afin de collecter les mesures journalières effectuées;

6, qui est le dispositif d'affichage à LCD déjà mentionné;

5, qui est le clavier déjà cité et qui permet d'introduire notamment la valeur de la longueur de la poutre 1;

18, qui est un dispositif thermométrique convertissant l'information qu'il reçoit, par sa borne 19, de la thermistance 13 et qui fournit au microprocesseur, par 30, la valeur de la température mesurée.

Le micro-processeur donne des ordres de travail au dispositif 18, par la ligne 29;

20, qui est un dispositif hygrométrique convertissant l'information qu'il reçoit, par sa borne 21, des sondes hygrométriques 10, 12, et qui les convertit en valeur correspondant au degré d'humidité mesuré, pour les fournir, par 28, au microprocesseur 31. Ce dernier donne des ordres de travail au dispositif 20, par une ligne 27;

22, qui est relié aux transducteurs piézo-électriques 11 des deux têtes 2 et 3, par des bornes 23, 24 et dont la fonction est de déterminer le temps de propagation des ondes ultrasonores dans la poutre 1, et de fournir cette valeur au microprocesseur 31, par la ligne 26. 25 est la ligne par laquelle le microprocesseur donne des ordres de travail au dispositif 22.

Les informations calculées par le microprocesseur, soit la vitesse de propagation des ultrasons, la valeur du degré d'humidité mesurée et la température mesurée, sont stockées dans la mémoire RAM 32. A partir de ces données, le microprocesseur calcule la vitesse normée de propagation de l'onde ultrasonique, pour les valeurs de norme de 12 % d'humidité et 20° C de température, par exemple, selon la procédure suivante.

Calcul de la vitesse de propagation $\underline{v}$ de l'onde ultrasonique :

$$v = \frac{l}{t},$$

l étant la longueur de la poutre et t le temps de parcours de cette longueur. La longueur 1 est préalablement introduite au moyen du clavier 5 et t est mesuré par 22.

Calcul de la vitesse de propagation normée pour une température de norme de 20° C: le coefficient de normalisation $K_1$ a été déterminé d'avance, expérimentalement; il est mémorisé, pour chaque essence de bois, dans la mémoire ROM 33 (la valeur codée de l'essence de bois de la poutre 1, est introduite par le clavier 17) :

$$v_{20°C} = K_1 \cdot v$$

Calcul du taux d'humidité normé selon la température (p.ex. 2o°C). Il a lieu à partir de tables de normalisation établies par le fabricant d'appareils de mesure du degré d'humidité, par exemple Siemens Electronic Moisture Meters MO 5819. Ces tables sont mémorisées dans la mémoire ROM 33. Le microprocesseur 31 recherche dans ces tables, la valeur du degré d'humidité à 20°C correspondant à la valeur mesurée à la température mesurée par 18.

Calcul de la vitesse ultrasonique normée ($v_{norm}$) pour un degré d'humidité donné, par exemple 12% à 2o°C.

Les coefficients de normalisation $K_2$ et $K_3$ sont déterminés expérimentalement, à l'avance, et les valeurs de ces coefficients sont mémorisées dans la mémoire ROM 33. La valeur de $v_{norm}$ est :

$$v_{norm} = K_2 \cdot v_{20°C} + K_3$$

Ensuite, le microprocesseur 31 cherche, dans une table mémorisée des valeurs limites de propagation des ondes ultrasoniques dans le matériau dont est faite la poutre 1, dans quelle classe se trouve la valeur de cette vitesse ultrasonique normée.

Ces valeurs limites, utilisées par l'Ecole polytechnique fédérale de Lausanne, sont par exemple les suivantes et c'est dans la mémoire ROM 33 qu'elles sont stockées:

Classe 3 : $v_{norm} < 5200$ m/s
Classe 2 : $5200$ m/s $< v_{norm} < 5400$ m/s
Classe 1 : $5400$ m/s $< v_{norm} < 5650$ m/s
Classe 0 : $v_{norm} > 5650$ m/s

Le microprocesseur ayant ainsi trouvé la classe à laquelle appartient la poutre 1, il en fait afficher l'indication au dispositif d'affichage 6, en même temps qu'il en fait stocker l'information dans la mémoire RAM 32, pour une utilisation ultérieure éventuelle.

Le module à microprocesseur 35 est équipé d'une mémoire non volatile EEPROM 34, qui stocke les constantes d'étalonnage de l'appareil.

Bien que l'appareil ait été décrit dans le cas du bois, il n'est pas limité à cet exemple d'utilisation. Il est utilisable pour tous matériaux hygroscopiques dont on désire déterminer la classe de propriétés mécaniques à laquelle il appartient.

L'appareil est suffisamment léger et peu volumineux pour être portable. Il peut être utilisé pour des mesures effectuées selon n'importe quelle direction dans le matériau à tester.

## Revendications

1. Appareil pour la détermination automatique et non destructive de la classe de propriétés mécaniques standardisées d'un échantillon d'un matériau hygroscopique, comportant :

des moyens de mesure (22, 31) de la vitesse de propagation d'ondes acoustiques dans l'échantillon (1),

des moyens de mesure (10, 12 20) du degré d'humidité dans l'échantillon,

des moyens de mesure (12, 13, 18) de la température dans l'échantillon,

en ce qu'il comporte une unité de gestion (35) à microprocesseur (31) et mémoires (32, 33, 34), à laquelle ces trois moyens de mesure sont reliés électriquement,

ces mémoires étant prévues pour mémoriser, pour au moins une espèce de matériau :

a) des valeurs numériques représentatives de la variation de la vitesse des ondes acoustiques dans cette espèce de matériau, en fonction de la température dans ce matériau,

b) des valeurs numériques représentatives de la variation du degré d'humidité dans cette espèce de matériau, en fonction de la température dans ce matériau,

c) des valeurs numériques représentatives de la variation de la vitesse de propagation des ondes acoustiques dans cette espèce de matériau, normée par rapport à une température de référence, en fonction du degré d'humidité normé aussi par rapport à la température de norme, pour cette même espèce de matériau,

d) des valeurs numériques de vitesses de propagation normées par rapport à la température de référence, des ondes acoustiques dans l'espèce de matériau considérée,correspondant aux limites de différentes classes de propriétés mécaniques standardisées de cette espèce de matériau,

et en ce que le microprocesseur (31) est agencé pour déterminer, pour l'espèce de matériau testé :

e) la vitesse de propagation des ondes acoustiques, normée pour une température de référence, au moyen de la mémoire a précitée,

f) le degré d'humidité normé pour cette température de référence, au moyen de la mémoire b précitée,

g) la valeur particulière de cette vitesse de propagation normée des ondes acoustiques qui correspond à la valeur calculée du degré d'humidité normé, au moyen de la mémoire c précitée,

le microprocesseur (31) étant en outre agencé pour comparer cette valeur particulière de la vitesse de propagation des ondes acoustiques, à des valeurs mémorisées, dans la mémoire d précitée, de cette même vitesse, qui correspondent à des limites de classes de propriétés mécaniques standardisées, et pour déterminer, par cette comparaison, la classe à laquelle l'échantillon testé appartient, et pour produire l'affichage de la classe ainsi déterminée sur un moyen d'affichage de l'appareil.

2. Appareil selon la revendication 1, comportant au moins une tête de mesure (2) dans laquelle trois détecteurs (11; 10, 12; 12, 13) des moyens de mesure précités sont incorporés, cette tête présentant des moyens (10, 12) pour l'appliquer et la maintenir en contact avec une partie de la surface de l'échantillon.

3. Appareil selon la revendication 2, les moyens détecteurs de la vitesse de propagation acoustique dans l'échantillon comprenant un transducteur (11) et des moyens élastiques (9) appliquant ce transducteur (11) sur la surface de l'échantillon (1) et agissant aussi comme amortisseur de chocs protégeant ce transducteur.

4. Appareil selon la revendication 3, comportant des moyens détecteurs de la température (12, 13) et du degré d'humidité (10, 12) dans l'échantillon comprenant deux sondes (10, 12) prévues pour être enfoncées à distance de la surface de l'échantillon (1) et agir ainsi comme moyen de fixation de la tête précitée (2) sur l'échantillon (1), ces deux sondes (10, 12) étant associées à des moyens (20) pour mesurer la résistance électrique entre elles, qui définit la valeur du degré d'humidité, l'une de ces sondes (12) coopérant avec une thermistance (13) disposée dans la tête susmentionnée (2) au moyen d'un conducteur thermique (12), pour déterminer la température dans l'échantillon (1).

5. Appareil selon la revendication 1, comportant des moyens à commande manuelle (17), pour introduire dans l'unité de gestion à microprocesseur (35), sous forme numérique, la nature du matériau testé et la longueur du trajet effectué par les ondes ultrasoniques dans l'échantillon de matériau testé (1).

## Patentansprüche

1. Gerät zur automatischen und zerstörungsfreien Bestimmung der Klasse standardisierter mechanischer Eigenschaften einer Probe eines hygroskopischen Materials mit

Organen (22, 31) zur Messung der Fortpflanzungsgeschwindigkeit von Schallwellen in der Probe (1),

Organen (10, 12, 20) zur Messung des Feuchtigkeitsgehalts in der Probe,

Organen (12, 13, 18) zur Messung der Temperatur in der Probe und

einer Überwachungseinheit (35) mit Mikroprozessor (31) und Speichern (32, 33, 34), an die die drei Messorgane elektrisch angeschlossen sind, wobei die Speicher dazu bestimmt sind, für zumindest eine Materialart

(a) repräsentative Zahlenwerte für die Veränderung der Schallgeschwindigkeit in dieser Materialart in Abhängigkeit von der Temperatur in diesem Material,

(b) repräsentative Zahlenwerte für die Veränderung des Feuchtigkeitsgehalts in dieser Materialart in Abhängigkeit von der Temperatur in diesem Material,

(c) repräsentative, auf eine Bezugstemperatur normalisierte Zahlenwerte für die Veränderung der Fortpflanzungsgeschwindigkeit von Schallwellen in dieser Materialart in Abhängigkeit vom ebenfalls auf die Normaltemperatur normalisierten Feuchtigkeitsgehalt für dieselbe Materialart und

(d) Zahlenwerte für die auf die Bezugstemperatur normalisierte Fortpflanzungsgeschwindigkeit der Schallwellen in der betrachteten Materialart, die den Grenzwerten für die verschiedenen Klassen standardisierter mechanischer Eigenschaften dieser Materialart entsprechen,

zu speichern, und der Mikroprozessor (31) dafür eingerichtet ist, für die geprüfte Materialart

(e) mit Hilfe des vorerwähnten Speichers a die auf eine Bezugstemperatur normalisierte Fortpflanzungsgeschwindigkeit der Schallwellen,

(f) mit Hilfe des vorerwähnten Speichers b den auf diese Bezugstemperatur normalisierten Feuchtigkeitsgehalt und

(g) mit Hilfe des vorerwähnten Speichers c den besonderen Wert dieser normalisierten Fortpflanzungsgeschwindigkeit der Schallwellen, der dem berechneten Wert des normalisierten Feuchtigkeitsgehalts entspricht, zu bestimmen,

wobei der Mikroprozessor (31) ausserdem dafür eingerichtet ist, diesen besonderen Wert der Fortpflanzungsgeschwindigkeit der Schallwellen mit im vorerwähnten Speicher d gespeicherten Werten derselben Geschwindigkeit zu vergleichen, die den Grenzen der Klassen standardisierter mechanischer Eigenschaften entsprechen, durch diesen Vergleich die Klasse zu bestimmen, der die Prüfprobe angehört, und die so bestimmte Klasse auf einem Anzeigeorgan des Geräts zur Anzeige zu bringen.

2. Gerät gemäss Anspruch 1 mit zumindest einem Messkopf (2), in den drei Detektoren (11; 10, 12; 12, 13) der vorerwähnten Messorgane eingebaut sind, wobei dieser Messkopf Organe (10, 12) aufweist, um mit einem Teil der Probenoberfläche in Berührung gebracht und gehalten zu werden.

3. Gerät gemäss Anspruch 2, dessen Organe für die Ermittlung der Schallgeschwindigkeit in der Probe einen Umformer (11) und elastische Elemente (9) umfassen, die diesen Umformer (11) an die Oberfläche der Probe (1) andrücken und gleichzeitig als Stossdämpfer wirken, die diesen Umformer schützen.

4. Gerät gemäss Anspruch 3, dessen Organe für die Ermittlung der Temperatur (12, 13) und des Feuchtigkeitsgehalts (10, 12) in der Probe zwei Sonden (10, 12) umfassen, die dazu bestimmt sind, voneinander beabstandet in die Oberfläche der Probe (1) eingeschlagen zu werden, und somit als Organe für eine Befestigung des vorerwähnten Messkopfes (2) an der Probe (1) wirken, wobei mit den beiden Sonden (10, 12) Organe (20) verbunden sind, um den Widerstand zwischen ihnen zu messen, der den Wert des Feuchtigkeitsgehalts definiert, und eine dieser Sonden (12) über einen Wärmeleiter (12) mit einem Thermistor (13) zusammenwirkt, der in dem oben erwähnten Messkopf angeordnet ist, um die Temperatur in der Probe (1) zu bestimmen.

5. Gerät gemäss Anspruch 1 mit handbedienten Organen (17), um in numerischer Form Angaben über die Natur des geprüften Materials und über die Länge des von den Ultraschallwellen in der geprüften Materialprobe (1) zurückgelegten Weges in die Mikroprozessor-Überwachungseinheit (35) einzugeben.

## Claims

1. An apparatus for automatically and non-destructively determining the class of standardized mechanical properties of a sample of a hygroscopic material comprising :

means for measuring (22, 31) the speed of propagation of acoustic waves in the sample (1),

means for measuring (10, 12, 20) the degree of humidity in the sample,

means for measuring (12, 13, 18) the temperature in the sample,

characterized in that there is provided a control unit (35) with a microprocessor (31) and memories (32, 33, 34) to which these three measuring means are connected electrically,

these memories being arranged for memorising for at least one species of material :

a) numerical values representative of the variation of the speed of the acoustic waves in this species of material, as a function of the temperature in this material,

b) numerical values representative of the variation of the degree of humidity in this species of material, as a function of the temperature of this material,

c) numerical values representative of the variation of the speed of propagation of the acoustic waves in this species of material, normed with respect to a reference temperature, as a function of the degree of humidity, also normed with respect to the norm temperature, for this same species of material.

d) numerical values of the speeds of propagation normed with respect to the reference temperature, of the acoustic waves in the species of material considered, corresponding to the limits of the different classes of mechanical properties standardized for this species of material,

and in that the microprocessor (31) is arranged for determining, for the species of material tested :

e) the speed of propagation of acoustic waves, normed for a reference temperature, by means of the above-mentioned memory a,

f) the degree of humidity normed for this reference temperature, by means of the above-mentioned memory b,

g) the particular value of this normed speed of propagation of the acoustic waves which corresponds to the calculated value of the normed degree of humidity, by means of the above-mentioned memory c,

the microprocessor (31) being further arranged for comparing this particular value to the speed of propagation of the acoustic waves to values memorized in the above-mentioned memory d of this same speed, which correspond to limits of classes of standardized mechanical properties and for determining by this comparison, the class to which the tested sample belongs and producing the display of the class thus determined on a display means of the apparatus.

2. An apparatus according to claim 1, comprising at least one measuring head (2) in which three sensors (11; 10, 12; 12, 13) of the above-mentioned measuring means are included, this head exhibiting means (10, 12) for applying it and maintaining it in contact with a part of the surface of the sample.

3. An apparatus according to claim 2, the sensor means for the speed of acoustic propagation in the sample comprising a transducer (11) and resilient means (9) biasing this transducer (11) against the surface of the sample (1) and acting also as shock dampener protecting this transducer.

4. An apparatus according to claim 3, comprising means for sensing the temperature (12, 13) and the degree of humidity (10, 12) in the sample comprising two sensors (10, 12) designed for being driven at a distance from the surface of the sample (1) and thus act as fastening means for the above-mentioned head (2) on the sample (1), these two sensors (10, 12) being associated with means (20) for measuring the electrical resistance therebetween, which defines the value of the degree of humidity, one of these sensors (12) cooperating with a thermistor (13) arranged in the above-mentioned head (2) by means of a thermal conductor (12), for determining the temperature inside the sample (1).

5. An apparatus according to claim 1, comprising manual control means (17) for introducing into the control unit (35) provided with a microprocessor in a digital form, the nature of the material tested and the distance travelled by the ultrasound waves in the sample of the material tested (1).

FIG. 2

FIG. 1

# FIG.3